# EUROPEAN PATENT APPLICATION

(11) **EP 4 518 309 A1**
(43) Date of publication of application: **05.03.2025**
(21) Application number: 24166293.1
(22) Date of filing: 26.03.2024
(51) Int. Cl.: H04N 7/14

(54) **WIRELESS MULTI-STREAM VIDEO PROCESSING DEVICE**

(30) Priority: 04.09.2023 TW 112133520
(71) Applicant: Magic Control Technology Corporation, New Taipei City 236658 (TW)
(72) Inventor: LIU, Pei-Chung, 235 New Taipei City (TW)
(74) Representative: Kador & Partner Part mbB

(57) **Abstract**

The present invention is related to a wireless multi-stream video processing device (100) for connecting with at least one wireless device and a receiving device, comprising: a wireless communication unit (102) for wirelessly connecting with the wireless device to receive a video (D) from the wireless device; and an image processing unit (104) for transmitting a connection request signal (SR) to the wireless device through the wireless communication unit, so that the wireless device returns a connection permission signal (SA) and the video according to the connection request signal, and performs processing on the video to become a plurality of output videos (D'), wherein the image processing unit processes the video according to a video display mode that is selected, and the wireless multi-stream video processing device provides a plurality of endpoints (EP) for the receiving device according to the number of the output videos, so as to transmit the output videos to the receiving device.

## Description

### PRIOR ART

In video conferencing, using wireless connection allows users to set up and adjust the position of the camera device more conveniently and freely.

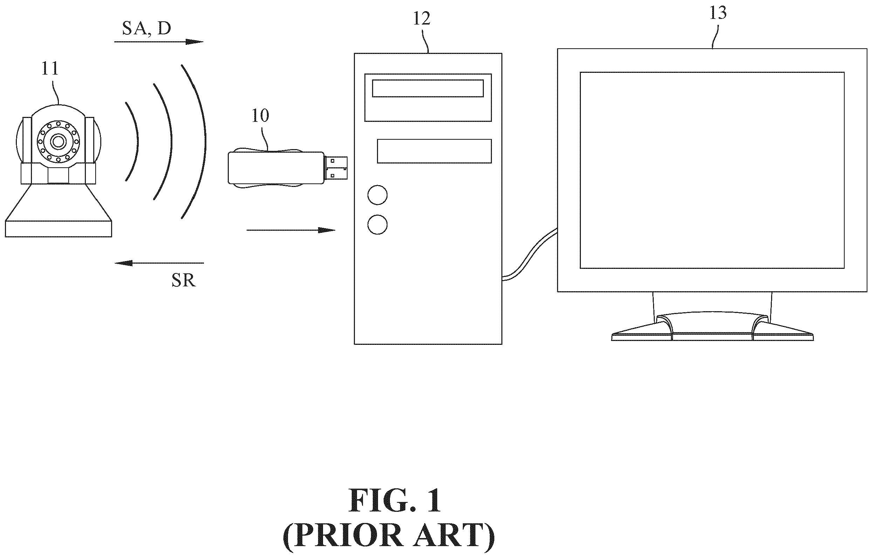

Please refer to FIG. 1, which is a schematic diagram of a conventional wireless video transmission device. A conventional video transmission system includes a wireless video transmission device 10, a wireless device 11, a receiving device 12, and a display device 13. The wireless device 11 is a wireless device configured to return a connection permission signal SA and a video D according to a connection request signal SR transmitted by the wireless video transmission device 10. In addition to the wireless device 11, the source of the video D can also be other sources on the Internet, such as a video player, etc., depending on actual needs. That is, the wireless device 11 may be a network camera device or a camera device equipped with a wireless communication unit. If the camera device is a network camera device, the wireless video transmission device 10 is connected to the Internet through a wireless communication unit and then connected thereto, unlike the wireless device 11 with a wireless communication unit in FIG. 1, which can be directly connected via Wi-Fi.

However, in a video conference, it is usually necessary to display videos from multiple camera devices simultaneously or to perform simple processing on the videos of the camera devices, so as to facilitate the conference.

Therefore, it is necessary to provide a method that can efficiently process the videos of multiple camera devices simultaneously, so that the videos of each camera device can be clearly displayed simultaneously.

In addition, existing video conferences usually involve multiple users located at different places using cameras on electronic devices such as computers, smart phones, tablets, etc., in conjunction with specific instant messaging applications, so as to conduct simultaneous video connections and voice communication.

However, this method still requires the installation, execution or configuration of specific communication software or corresponding camera drivers. In addition, most video software uses cameras connected to electronic devices and cannot use cameras or cameras on the Internet. A wireless camera, therefore, generally requires the installation of a virtual device or driver. As a result, it will be limited by the compatibility of software and hardware, and it will also need to be matched with specific camera equipment.

Therefore, it is necessary to propose a video processing device that can wirelessly connect to multiple camera devices, so as to achieve a more immediate and easier video sharing method.

### BACKGROUND OF THE INVENTION

The present invention relates to a wireless multi-stream video processing device, particularly a wireless multi-stream video processing device wirelessly connected to at least one wireless device.

### SUMMARY OF THE INVENTION

In order to achieve the purpose of effectively solving the above problems, the present invention proposes a wireless multi-stream video processing device for connecting with at least one wireless device and a receiving device, the wireless multi-stream video processing device comprising: a wireless communication unit for wirelessly connecting with the at least one wireless device to receive at least one video from the at least one wireless device; and an image processing unit for transmitting a connection request signal to the at least one wireless device through the wireless communication unit, so that the at least one wireless device returns a connection permission signal and the at least one video according to the connection request signal, and performs processing on the at least one video to become at least one output video, wherein, the image processing unit processes the at least one video according to a video display mode that is selected, and wherein, the wireless multi-stream video processing device provides a plurality of endpoints for the receiving device according to the number of the at least one output video, so as to transmit the at least one output video to the receiving device.

Preferably, the wireless communication unit and the at least one wireless device use a Wi-Fi protocol for wireless connection.

Preferably, the image processing unit includes a video processor, a neural network processor, a memory, and a storage unit, and the video processor and the neural network processor use a program stored in the storage unit to perform the processing, and the memory is used to store the at least one video and the at least one output video.

Preferably, the wireless multi-stream video processing device further includes: a USB control unit for receiving the at least one output video, reporting an endpoint information to the receiving device according to the at least one output video, and providing the endpoints for the receiving device according to the number of the at least one output video; and a connection port unit for receiving the at least one output video from the USB control unit, so as to transmit the at least one output video to the receiving device.

Preferably, the video display mode includes picture-in-picture, side-by-side, cropping, overlapping, zooming in and out, and original picture.

Preferably, the processing further includes a format processing to convert the format of the received at least one video into a format that complies with the USB video class, so as to allow the connection port unit to transmit the at least one output video.

Preferably, the processing further includes a resolution processing to convert a resolution of the received at least one video into a resolution consistent with the receiving device.

In order for those familiar with the art to understand the purpose, characteristics and effects of the present invention, the present invention is described in detail as follows through the following specific embodiments and in conjunction with the attached drawings.

### BRIEF DESCRIPTION OF DRAWINGS

Figure 1 is a schematic diagram of a conventional wireless video transmission device.
Figure 2 is a schematic diagram of a wireless multi-stream video processing device according to the present invention.
Figure 3 is a block diagram of a wireless multi-stream video processing device according to an embodiment of the present invention.

### DETAILED DESCRIPTION OF THE INVENTION

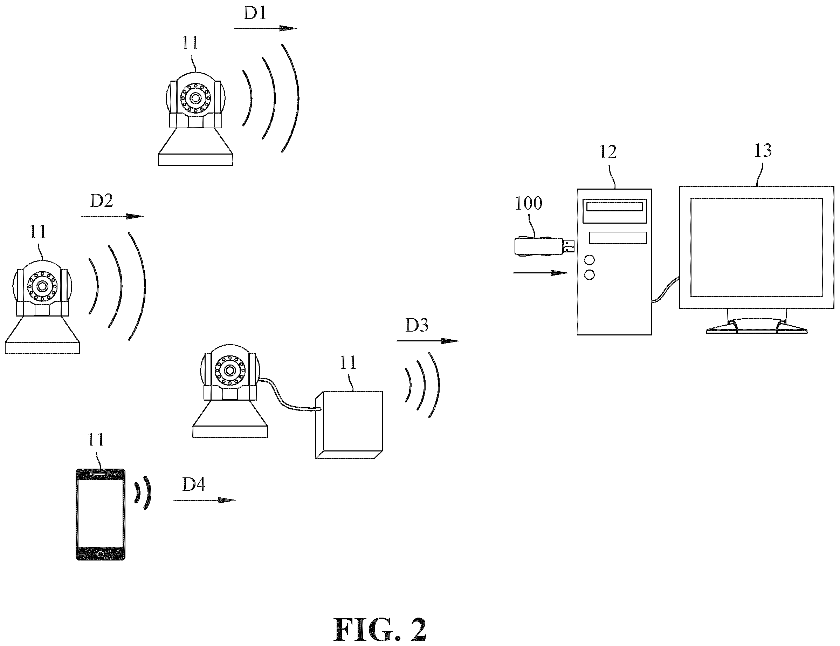

Please refer to FIG. 2, which is a schematic diagram of a wireless multi-stream video processing device 100 according to the present invention. The wireless multi-stream video processing device 100 of the present invention may be wirelessly connected to a plurality of wireless devices 11 to receive videos D1 to D4 from the wireless devices 11. Here, it is preferable to use a Wi-Fi protocol for connection, but the present invention is not limited thereto. Wireless devices may include any device with a wireless connection function, including but not limited to panoramic cameras, cameras with pan/tilt/zoom (PTZ) functions, mobile phones and other devices with camera functions. In addition, the wireless device itself may not have a camera function, but may be connected to a processing or transmission device of a camera device that has a camera function. For example, a wireless device may receive videos transmitted by multiple camera devices with camera functions, process the videos, and wirelessly transmit the processed videos to the wireless multi-stream video processing device 100 of the present invention.

Therefore, it can be understood that the videos D1 to D4 received by the wireless multi-stream video processing device 100 of the present invention may include but are not limited to any processed or unprocessed videos. For example, the processed video may include video processed by a wireless device with video processing capabilities. This processing includes, but is not limited to, picture-in-picture, picture-by-picture, picture cropping, picture overlapping, picture zooming in and out, and other processing. In addition, the processed videos may also have various resolutions, specifications, ratios, etc. In addition, for example, the unprocessed videos may include, but are not limited to, videos with various resolutions, specifications, and proportions captured by various different camera devices. It can be understood that the present invention does not limit the number of received videos, and the wireless multi-stream video processing device 100 may wirelessly receive one or more videos.

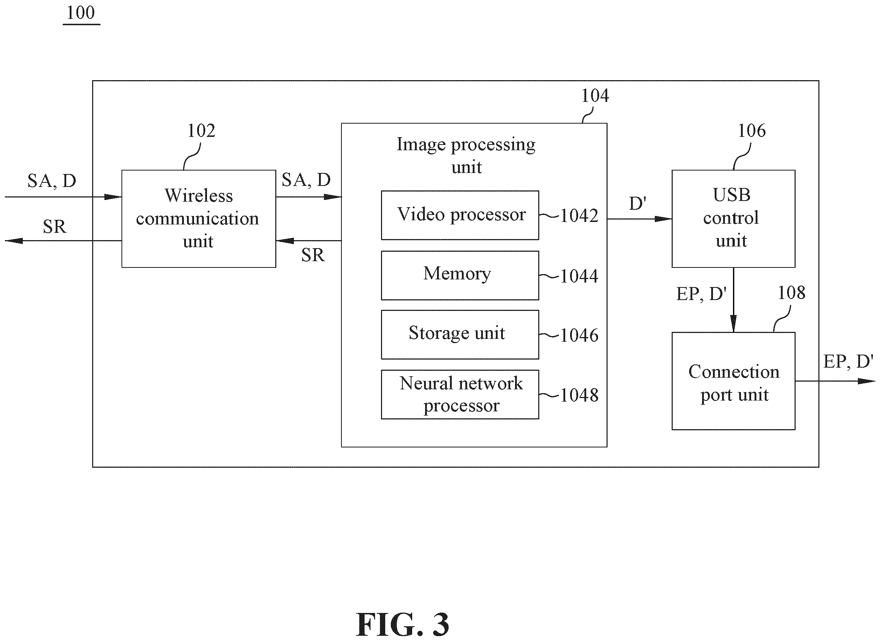

Please refer to FIG. 3, which is a block diagram of a wireless multi-stream video processing device according to an embodiment of the present invention. In the embodiment of this case, the wireless multi-stream video processing device 100 includes: a wireless communication unit 102 for wirelessly connecting to the wireless device 11 to receive video D from the wireless device 11; an image processing unit 104 for transmitting a connection request signal SR through the wireless communication unit 102 to the wireless device 11, so that the wireless device 11 returns a connection permission signal SA and a video D according to the connection request signal SR, and processes the video D to become an output video D'; a USB control unit 106 for receiving the output video D' to report an endpoint information EP to the receiving device 12 according to the output video D', and providing a plurality of endpoints for the receiving device 12 according to the number of output videos D'; and a connection port unit 108 for receiving the output video D' from the USB control unit 106 to transmit the output video D' to the receiving device 12. Specifically, the wireless multi-stream video processing device 100 is connected to the receiving device 12 through the connection port unit 108, and the supported format of the connection port unit 108 may be USB 2.0, USB 3.0, USB Type-C, multi-cable connection port, or customized ports, but not limited thereto.

Specifically, when the wireless multi-stream video processing device 100 is coupled to the wireless device 11 through the wireless communication unit 102, the wireless multi-stream video processing device 100 sends the connection request signal SR to the wireless device 11 through the wireless communication unit 102, and the wireless device 11 identifies the wireless multi-stream video processing device 100 according to the connection request signal SR, and return the connection permission signal SA and video D.

Specifically, the USB control unit 106 provides the receiving device 12 with a number of endpoints corresponding to the number of output videos D', so as to transmit the output video D' to the receiving device 12. For example, when the number of output videos D' received by the USB control unit 106 is six output videos D', the USB control unit 106 provides six endpoints to the receiving device 12, so that the receiving device 12 may receive six output videos D' at the same time, and so on.

It can be understood that the image processing unit 104 processes the video D according to a video display mode that is selected to transmit the output video D' to the receiving device 12. It can be understood that the image processing unit 104 may not perform processing on the video D according to the selected video display mode, for example, process the video D and then output it (or directly output the video D without processing it) as the output video D' to be transmitted to the receiving device 12.

In addition, the image processing unit 104 includes: a video processor 1042; a memory 1044; a storage unit 1046; and a neural network processor 1048, which uses an artificial intelligence engine to adaptively assist the image processing of the image processing unit 104. The video processor 1042 and the neural network processor 1048 use a program stored in the storage unit 1046 to execute the video display mode, and the memory 1044 is used to store the video D and output the video D'. Specifically, the memory 1044 and the storage unit 1046 may include any form of memory, including but not limited to RAM.

Please refer to FIGSs. 2 and 3. In this embodiment, the wireless multi-stream video processing device 100 is wirelessly connected to a plurality of wireless devices 11 to receive videos D1 to D4 from the wireless devices 11. Specifically, the image processing unit 104 of the wireless multi-stream video processing device 100 sends a connection request signal SR to each wireless device 11 through the wireless communication unit 102, so that each wireless device 11 returns a connection permission signal SA and videos D1 to D4, respectively, according to the connection request signal SR. The videos D1 to D4 are processed by the image processing unit 104 to become the output video D'.

Specifically, the image processing unit 104 processes the videos D1 to D4 according to the selected video display mode. The video display mode includes, but is not limited to, picture-in-picture, side-by-side, cropping, overlapping, zooming in and out, original picture, etc. It can be understood that when the video display mode that is selected is the original picture, the image processing unit 104 may not process the video D and directly output the video D as the output video D'. In addition, the video display mode may also include processing the incoming video using computer vision algorithms through the neural network processor 1048, such as edge detection, image segmentation, and feature extraction. Also, use person detection algorithms to identify and locate people in the video, such as attendees' faces, human body shapes, or other objects of interest. In addition, a person detection algorithm is used to identify and locate people in the screen or image. Also, once a person is identified, AI algorithms use motion tracking technology to track the person's movement over time. In addition, the image processing unit 104 may also process the videos D1 to D4 in different video display modes. For example, the video D1 is processed in the first video display mode, and the videos D2-D4 are processed in the second video display mode. However, the present invention is not limited thereto.

For example, assuming that the video D1 is a video captured by a panoramic camera and the captured video includes five people, the image processing unit 104 identifies the five people respectively according to the selected video display mode, and output five cropped videos tracking the five characters and the original panoramic video. Therefore, the image processing unit 104 processes the video D1 and outputs six output videos D'. Therefore, according to the selected video display mode, the image processing unit 104 outputs multiple output videos D' in a multi-stream manner. Or, for example, according to another selected video display mode, the videos D1 to D4 may all be displayed as one video in the side-by-side mode, so the image processing unit 104 may output one output video D'.

Accordingly, the USB control unit 106 receives at least one output video D', so as to report an endpoint information EP to the receiving device 12 based on the at least one output video D'. For example, assuming that the image processing unit 104 outputs six output videos D', the endpoint information EP reported by the USB control unit 106 is six endpoints, so that the receiving device 12 is prepares the channels to transmit six videos, and so on.

In addition, the processing further includes format processing and resolution processing. When the image processing unit 104 receives the video D and processes the video D to become the output video D', the image processing unit 104 simultaneously convert the video D into a format that complies with the USB Video Class (UVC), so that the connection port unit 108 is capable of transmitting the output video D'. For example, if the format of the video D of the wireless device 11 is a non-UVC format, such as a Real Time Streaming Protocol (RTSP) stream, the image processing unit 104 performs format processing to convert the format into UVC format. Also, for example, if the format of the video D of the wireless device 11 is the UVC format, generally the most common technology is the Motion Joint Photographic Experts Group (MJPEG) format, the image processing unit 104 does not perform format processing. In addition, in other embodiments, the receiving device 12 and the display device 13 may be an integrated device with a display function, such as a mobile phone, a tablet, a notebook computer, or any portable device.

In addition, the processing further includes resolution processing. If the video D output by the wireless device 11 to the wireless multi-stream video processing device 100 has a first resolution (for example, 1080p), and the resolution of the receiving device 12 is set to a second resolution (for example, 720p). The image processing unit 104 performs resolution processing, such as scaling, on the video D to adjust the output video D' to the second resolution. It should be noted that the second resolution may be larger than the first resolution depending on actual requirements. For example, the second resolution is 4Kp, which is larger than the first resolution of 1080p.

Compared with the previous technology, since the UVC driver is a native (generic) driver that is preinstalled in most operating systems, the wireless multi-stream video processing device 100 and the wireless device 11 do not need to additionally install, execute or configure a specific driver to receive the connected video on the receiving device 12, which can avoid driver compatibility issues, reduce the difficulty of use and improve convenience. In actual application, users may use flexibly transmit content from various devices and media equipment through any wireless device, and the wireless multi-stream video processing device 100 may automatically adjust the resolution settings through video processing according to the resolution of the receiving device 12, and configured the format of the displayed video as needed.

The present invention is not limited to the above-described embodiments. It is obvious to those skilled in the art that various modifications and changes may be made to the present invention without departing from the spirit or scope of the present invention.

Therefore, the present invention is intended to cover modifications and changes made to the present invention or falling within the scope of the appended patent applications and their equivalents.

## Claims

1. A wireless multi-stream video processing device for connecting with at least one wireless device and a receiving device, the wireless multi-stream video processing device comprising:
a wireless communication unit for wirelessly connecting with the at least one wireless device to receive at least one video from the at least one wireless device; and
an image processing unit for transmitting a connection request signal to the at least one wireless device through the wireless communication unit, so that the at least one wireless device returns a connection permission signal and the at least one video according to the connection request signal, and performs processing on the at least one video to become at least one output video,
wherein, the image processing unit processes the at least one video according to a video display mode that is selected, and
wherein, the wireless multi-stream video processing device provides a plurality of endpoints for the receiving device according to the number of the at least one output video, so as to transmit the at least one output video to the receiving device.

2. The wireless multi-stream video processing device according to claim 1, wherein the wireless communication unit and the at least one wireless device use a Wi-Fi protocol for wireless connection.

3. The wireless multi-stream video processing device according to claim 1,
wherein, the image processing unit includes a video processor, a neural network processor, a memory, and a storage unit, and
wherein, the video processor and the neural network processor use a program stored in the storage unit to perform the processing, and the memory is used to store the at least one video and the at least one output video.

4. The wireless multi-stream video processing device according to claim 1, further comprising:
a USB control unit for receiving the at least one output video, reporting an endpoint information to the receiving device according to the at least one output video, and providing the endpoints for the receiving device according to the number of the at least one output video; and
a connection port unit for receiving the at least one output video from the USB control unit, so as to transmit the at least one output video to the receiving device.

5. The wireless multi-stream video processing device according to claim 1, wherein the video display mode includes picture-in-picture, side-by-side, cropping, overlapping, zooming in and out, and original picture.

6. The wireless multi-stream video processing device according to claim 4, wherein the processing further includes a format processing to convert the format of the received at least one video into a format that complies with the USB video class, so as to allow the connection port unit to transmit the at least one output video.

7. The wireless multi-stream video processing device according to claim 1, wherein the processing further includes a resolution processing to convert a resolution of the received at least one video into a resolution consistent with the receiving device.
